# EUROPEAN PATENT SPECIFICATION

(11) **EP 3 184 377 B1**
(45) Date of publication and mention of the grant of the patent: **12.02.2020**
(21) Application number: 15201802.4
(22) Date of filing: 22.12.2015
(51) Int. Cl.: B60R 21/38

(54) **HINGE ARRANGEMENT**
SCHARNIERANORDNUNG
AGENCEMENT DE CHARNIÈRE

(43) Date of publication of application: 28.06.2017
(73) Proprietor: Volvo Car Corporation, 40 531 Göteborg (SE)
(72) Inventor: Lindmark, Peter, 42243 Hisings Backa (SE); Stenmark, Carin, 42658 Västra Frölunda (SE); Tekin, Cihan, 42245 Hisings Backa (SE); Fredriksson, Anders, 43351 Öjersjö (SE)
(74) Representative: Kransell & Wennborg KB

(56) References cited:
- WO-A1-2015/162828
- GB-A- 2 387 581
- US-A1- 2009 050 388

## Description

### TECHNICAL FIELD

The present disclosure relates to a hinge arrangement for a bonnet of a vehicle. The disclosure further relates to a bonnet arrangement comprising such a hinge arrangement and to a vehicle.

### BACKGROUND

If a motor vehicle, such as a car, is involved in an accident in which the front part of the vehicle hits a vulnerable road user, such as a pedestrian or a cyclist, it is not uncommon that the head of the vulnerable road user impacts on the bonnet of the vehicle. The vulnerable road user may in that case risk to be severely injured. One parameter, which can affect the severity of the injury, is the fact that the bonnet, which is usually formed from a thin metal sheet, would tend to bend, and then deform on hard engine parts, such as an engine block, located in an engine compartment beneath the bonnet. In order to reduce the severity of these accidents, it is well-known to use a deployable bonnet. By displacing bonnet to a deployed position, also called a pop-up position, e.g. by raising at least its rear end, the distance between the bonnet and the hard engine parts is increased, and thereby the consequences of such an impact are mitigated.

The bonnet is in American English known as a hood, but herein the British English term bonnet is used.

Patent document JPH 11-99966A discloses a hinge arrangement for a bonnet of a vehicle. The hinge arrangement comprises a centre link having a first end connected at a first pivot axis to a bracket attached to the bonnet and a second end connected at a second pivot axis to a slide hole in a body pedestal part. When the bonnet is opened to allow for service or maintenance, the bracket is pivoted at the first pivot axis. In addition, the bonnet may be raised to a deployed position by the lower end of the centre link sliding in the slide hole, while pivoting at both the first and second pivot axes. Hence the centre link and the first pivot axis is active both during normal opening of the bonnet and when going to the deployed position. Further, the centre link is provided with a bending part in the axial direction of the longitudinal direction of the vehicle. Hence if a load is applied in the vertical direction to the bonnet when in the deployed position, the centre link will bend at the bending part.

### SUMMARY

The object of the present disclosure is to overcome or ameliorate at least one of the disadvantages of the prior art, or to provide a useful alternative.

The object above may be achieved by the subject-matter of claim 1.

Thus, in a first aspect of the present invention there is provided a hinge arrangement adapted to be located at an end portion of a bonnet of a vehicle. The hinge arrangement has a longitudinal direction, a transverse direction and a vertical direction. The hinge arrangement is transitable between a normal state and a deployed state. The hinge arrangement comprises a hinge portion adapted to be attached, directly or indirectly, to a body of the vehicle, a bracket portion adapted to be attached, directly or indirectly, to the bonnet, and a deployment guiding element. The hinge portion comprises a first member, a second member and a hinge pivot axis providing a hinged connection between the first member and the second member. The deployment guiding element comprises a first end pivotally connected to the bracket portion and a second end pivotally connected to the first member. The bracket portion is arranged to be in a fixed position relative to the first member during movement in the hinged connection. Further, the bracket portion is arranged to be translationally displaced as a whole at least in the vertical direction in relation to the first member of the hinge portion during the transition of the hinge arrangement between the normal state and the deployed state, the deployment guiding element being adapted to control the transition, the hinged connection being inactive during the transition. The deployment guiding element comprises a deformation control means configured to make the deployment guiding element deformable at a preselectable force level in the deployed state of the hinge arrangement, such that the bracket portion is displaceable towards the first member.

With a hinge arrangement as described herein, it is possible to decouple the movements occurring within the hinge arrangement during normal opening of the bonnet, with the hinge arrangement being in its normal state, from the movements occurring within the Document WO 2015/162828 A1 relates to a system configured to lift a hood of a vehicle. The system includes a hinge arrangement according to the preamble of claim 1. hinge arrangement during the transition of the hinge arrangement from the normal state to the deployed state, i.e. when the bonnet is displaced to its deployed position.

This differs from prior art hinge arrangements. For example, according to the hinge arrangement of JPH11-99966A, both pivot axes are active when displacing the bonnet from the closed position to the deployed position. Hence the centre link and the first pivot axis are active both during normal opening of the bonnet and when going to the deployed position.

The hinge arrangement as described herein has a longitudinal direction, a transverse direction and a vertical direction, which are perpendicular to each other. The directionality of the hinge arrangement corresponds to the directionality of the vehicle, such that the longitudinal direction of the hinge arrangement corresponds to a longitudinal direction of the vehicle, the transverse direction of the hinge arrangement corresponds to a transverse direction of the vehicle and the vertical direction of the hinge arrangement corresponds to a vertical direction of the vehicle, assuming the vehicle is standing on a horizontal ground.

During normal opening of the bonnet, the deployment guiding element is inactive. However, during displacement of the bonnet to its deployed position, the deployment guiding element is active and controls the displacement movement of the hinge arrangement. The characteristics of the deployment guiding element may be selected to obtain the desired behaviour of the hinge arrangement when in the deployed state, such that the hinge arrangement will collapse in a controllable way, e.g. in case a head of a vulnerable road user would impact with the bonnet.

By selecting one or more parameters of the deformation control means, it may be obtained that the deployment guiding element deforms at a desired force level of the impact force. Examples of such selectable parameters are material, shape and thickness of the deployment guiding element, width and location of a waist in the deployment guiding element, location and shape of one or more notches or indentations at an edge of the deployment guiding element or apertures through the deployment guiding element. A number of these parameters are further described herein.

During deformation of the deployment guiding element, its first and its second ends come closer to each other. The deployment guiding element may bend or buckle, e.g. bend like a jack-knife.

The bonnet is displaceable between the closed position and the deployed position. The closed position of the bonnet is the normal position of the bonnet, which for example is used when driving the vehicle or parking the vehicle. The bonnet then covers the engine compartment.

The deployed position of the bonnet is located at least upwards as compared to the closed position. When a sensor of the vehicle has indicated a collision with a vulnerable road user or an imminent collision with a vulnerable road user, the bonnet may be displaced to the deployed position, thereby increasing the distance between the bonnet and the hard engine parts, and hence the consequences of such a collision are mitigated. Preferably the deployed position is located upwards and rearwards as compared to the closed position, but it would also be possible to have a deployed position being straight upwards as compared to the closed position, or upwards and forwards. The directions, i.e. upwards, rearwards and forwards, are defined in relation to the body of the vehicle, assuming it is standing on a horizontal ground. The bonnet is preferably arranged such that when displacing it from the closed position to the deployed position, the bonnet moves simultaneously upwards and rearwards in a combined movement.

The upward movement direction of the bonnet corresponds to the above-mentioned vertical direction of the hinge arrangement, while the rearwards movement direction of the bonnet corresponds to the longitudinal direction of the hinge arrangement.

The bonnet may be arranged such that the deployed position of the bonnet permits partial access to the engine compartment, e.g. for filling a vehicular liquid, such as a washer fluid or a coolant. Thereby there is no need to open the bonnet to a fully open position for such tasks.

By displacing the bonnet to the deployed position at least upwards, preferably upwards and rearwards, the distance between the bonnet and the hard engine parts is increased, thereby reducing the severity of an accident involving a vulnerable road user impacting on the bonnet.

If the hinge arrangement as described herein is located at a rear end portion of the bonnet and hence operates on the rear end portion of the bonnet when deploying the bonnet, the bonnet may as an option also be adapted to raise a front end portion of the bonnet at least upwards, preferably upwards and rearwards. In that case, the whole bonnet is raised to reach the deployed position. The bonnet is then moved as a whole, although the actual displacements, e.g. given in millimetres, at the two end portions may differ. Raising the front end portion of the bonnet, or both end portions, may be advantageous in case the vulnerable road user hits a front portion of the bonnet, e.g. if the vulnerable road user is short, such as a child.

The hinge arrangement as described herein may, as an alternative or a complement, be located at a front end portion of the bonnet and hence operate on the front end portion when deploying the bonnet. In that case, the rear end portion may be deployable by means of its own lifting unit, such that the whole bonnet may be raised when in the deployed position.

The bonnet may also assume an open position. The open position permits access to the engine compartment of the vehicle e.g. for service, maintenance or repair work. In order to reach the open position, the bonnet is pivoted around the hinged connection with one or more hinge pivot axis/axes extending substantially in the transverse direction of the vehicle at or adjacent to the end portion of the bonnet. The open position of the bonnet arrangement as described can be reached without passing the deployed position.

The hinge portion of the hinge arrangement provides the hinged connection allowing normal opening of the bonnet, e.g. to the open position. The hinge portion may comprise a single hinge pivot axis, but it would also be feasible with a multi-link hinged connection comprising a plurality of hinge pivot axes and one or more link arms.

When the hinge arrangement as described herein is mounted in a vehicle, the first member of the hinge portion is more distal to the body of the vehicle than the hinged connection, i.e. the first member is situated further away from the point of attachment of the hinge arrangement to the body of the vehicle than the hinged connection. The first member is thus connected via the hinged connection, the second member and possibly other components to the body of the vehicle.

When the hinge arrangement as described herein is mounted in a vehicle, the second member of the hinge portion is more proximal to the body of the vehicle than the hinged connection, i.e. the second member is situated closer to the point of attachment of the hinge arrangement to the body than the hinged connection, e.g. the second member being directly attached to the body of the vehicle.

The bracket portion as a whole is arranged to be translationally displaced at least in the vertical direction of the hinge arrangement, i.e. upwards in relation to the vehicle, in relation to the first member of the hinge portion during the transition of the hinge arrangement between the normal state and the deployed state. Preferably the bracket portion is translationally displaced both in the vertical and longitudinal directions, i.e. upwards and rearwards in relation to the vehicle, e.g. following an arc of a circle, but it is would also be possible to displace it straight upwards, or upwards and forwards in relation to the vehicle. The transition of the hinge arrangement as described herein is controlled by the deployment guiding element, e.g. the deployment guiding element is adapted to guide the movement of the bracket portion in relation to the hinge portion, in particular in relation to its first member. As a comparison, in the hinge arrangement of JPH11-99966A the transition of the hinge arrangement is controlled by the rotations at the pivot axes and there is no component corresponding to the deployment guiding element.

The deployment guiding element may be directly or indirectly connected to the bracket portion and to the first member of the hinge portion. Preferably a single deployment guiding element is used in the hinge arrangement as described herein. The deployment guiding element comprises a first end pivotally connected to the bracket portion, e.g. at a second pivot axis, and a second end pivotally connected to the first member, e.g. at a third pivot axis. Hence, the deployment guiding element is configured to pivot at the second and third pivot axes to provide the translational displacement of the bracket portion in relation to the first member. The second pivot axis may be located at a half of the bracket portion being furthest away from the hinged connection. The third pivot axis may be located in a centre portion of the first member.

The deployment guiding element may be configured to substantially deform in a plane extending in the longitudinal direction and the vertical direction of the hinge arrangement. Preferably the deployment guiding element is configured to deform in the plane only, e.g. by bending and/or buckling in the plane. The plane extends in the longitudinal and vertical directions of the hinge arrangement, such that both of these directions lie in that plane and the transverse direction is perpendicular to that plane. By this configuration of the hinge arrangement, deformation in the transverse direction of the hinge arrangement is avoided or substantially avoided. Hence, the deployment guiding element may substantially deform in the space between the first member of the hinge portion and the bracket portion, e.g. by bending in the available space. Thereby the head injury risk is reduced, e.g. as determined by HIC values. Further, the service cost may be reduced. In addition, such a configuration makes it easy to fine-tune the above-mentioned preselectable force level.

The deformation control means may comprise a curved-shape portion of the deployment guiding element. The deployment guiding element may have the shape of a banana or a crescent. The curved shape is preferably arranged such that it curves downwards, when the hinge arrangement is in its normal state, i.e. the centre of the deployment guiding element is then located below a straight line drawn through its connections to the bracket portion and the first member.

The deformation control means may comprise a waist in the deployment guiding element, the waist being less resistant to deformation than the rest of the deployment guiding element. Hence, the waist will deform at a lower force than other parts of the deployment guiding element. The waist may have less width as seen in the above-mentioned plane extending in the longitudinal direction and the vertical direction of the hinge arrangement, when the hinge arrangement is in its normal state.

The deformation control means may comprise a notch at an edge of the deployment guiding element, preferably at the edge facing the hinged connection. The notch may contribute to forming the waist in the deployment guiding element.

The deformation control means may comprise at least one aperture going through the deployment guiding element. The aperture may contribute to forming the waist in the deployment guiding element.

The deformation control means may comprise an indentation, preferably at the edge facing away from the hinge arrangement. The indentation may contribute to forming the waist in the deployment guiding element. The indentation has a longer extension in the longitudinal direction of the deployment guiding element than the notch. Purely as an example, a notch may have a size in the range of 1-10 mm in the longitudinal direction of the deployment guiding element, while the indentation may have a size in the range of 10-30 mm in the longitudinal direction of the deployment guiding element. The longitudinal direction of the deployment guiding element is defined by a line going through its first and second ends.

One or more notches, one or more apertures and/or one or more indentations may be combined with each other.

The deformation control means may be located in the deployment guiding element in a region being defined by a centre of the deployment guiding element +/- 40% of a length of a centreline of the deployment guiding element, preferably in a region being defined by the centre +/- 30% of the length of the centreline, more preferably in a region being defined by the centre +/- 20% of the length of the centreline, most preferably in a region being defined by the centre +/- 10% of the length of the centreline. The centreline follows the shape of the deployment guiding element, so if the shape of the deployment guiding element is curved, the centreline is curved as well.

The first member of the hinge portion may comprise an abutment member, e.g. a flange, adapted to provide an abutment for the bracket portion in the normal state of the hinge arrangement and/or to provide a stop for the deployment guiding element in the deployed state of the hinge arrangement.

The hinge portion may comprise a first locking unit, having a locked state and an open state and being adapted to lock the first member of the hinge portion in relation to the second member of the hinge portion. In the open state, the first locking unit allows opening of the bonnet, and in the locked state the first locking unit locks the first member of the hinge portion in relation to the second member of the hinge portion, i.e. their positions in relation to each other are fixed.

The locked state of the first locking unit is utilized during the transition of the hinge arrangement between its normal state and its deployed state. During this transition the hinged connection is inactive, i.e. there is no pivotal movement in the hinge portion. The open state of the first locking unit is utilized during normal opening of the bonnet.

The first locking unit may comprise a first locking member pivotally attached to the first or second member of the hinge portion, the first locking member being adapted to cooperate with a catch located at the other of the first and second member of the hinge portion, thereby locking the first member in relation to the second member.

The first locking member may comprise or be constituted by a hook. The hook may be tensioned, e.g. by a spring, such that it is biased to the locked state. In the open state, the spring is tensioned such that the hook moves out of grip. The first member is then displaceable in relation to the second member by means of the hinged connection, thus allowing normal opening of the bonnet. The first locking member may be located at the second member of the hinge portion and the catch at the first member of the hinge portion, but they may also be located in the opposite way. A portion of the first member, or the second member if applicable, may be utilized as the catch.

Other kinds of first locking units are feasible, such as a spring-loaded pin attached to one of the first member or the second member and going through an opening in the other of the first member or the second member, which pin may be pulled out from the opening to assume the open state allowing pivotal movement at the hinged connection between the first member and the second member.

The hinge arrangement may comprise a second locking unit, having a locked state and an open state and being adapted to lock the bracket portion in relation to the first member of the hinge portion. In the locked state, the second locking unit locks the bracket portion in relation to the first member of the hinge portion. In the open state, the second locking unit allows translational displacement of the bracket portion at least in the vertical direction of the hinge arrangement, preferably in the vertical and longitudinal directions of the hinge arrangement.

The second locking unit is in its locked state during normal opening of the bonnet. Further, the second locking unit is in its open state during the transition of the hinge arrangement between its normal state and its deployed state.

The second locking unit may comprise a hook and a catch. The hook may be tensioned, e.g. by a spring, such that it is biased to the locked state. In the open state, the spring is tensioned such that the hook moves out of grip. The bracket portion is then displaceable in relation to the first member, thus allowing the transition of the hinge arrangement between its normal state and its deployed state. The hook may be located at the bracket portion and the catch at the first member, but they may also be located in the opposite way. A portion of the first member, or the bracket portion if applicable, may be utilized as the catch. The hook may be pivotable around one of the second or third pivot axes in order to change its state between its closed and its open state.

Other kinds of second locking units are feasible, such as a spring-loaded pin attached to one of the bracket portion or the first member and going through an opening in the other of the bracket portion or the first member, which pin may be pulled out from the opening to assume the open state allowing pivotal movement at the hinged connection between the bracket portion and the first member.

The hinge arrangement may comprise a lifting member adapted to directly or indirectly operate on the bracket portion, thereby providing the translational displacement of the bracket portion at least in the vertical direction of the hinge arrangement, preferably in the vertical and longitudinal directions of the hinge arrangement, during the transition of the hinge arrangement between the normal state and the deployed state.

The lifting member may be a piston released by pyrotechnics. The bracket portion may comprise an abutment adapted for the lifting member to push on, e.g. by having an abutment surface perpendicular to the axial direction of the piston.

The lifting member may be adapted to operate on the second locking unit, such that the second locking unit is changed from its locked state to its open state by the lifting member. The lifting member may e.g. push the bracket portion via pushing on the second locking unit.

In a second aspect of the present invention, there is provided a bonnet arrangement for a vehicle, the bonnet arrangement comprising a bonnet being displaceable between a closed position and a deployed position located at least upwards, preferably upwards and rearwards, as compared to the closed position, and a hinge arrangement as described herein. The bracket portion of the hinge arrangement is attached, directly or indirectly, to the bonnet.

The rear end portion of the bonnet may be adapted to be displaced rearwards by a longitudinal distance dₓᵣ being in the range of 0 < dₓᵣ ≤ 70 mm, preferably 10 mm ≤ dₓᵣ ≤ 40 mm in relation to the body of the vehicle during the displacement from the closed position to the deployed position. Further, the rear end portion may be adapted to be displaced upwards by a vertical distance d_{zr} being in the range of 0 < d_{zr} ≤ 150 mm, preferably 50 mm ≤ d_{zr} ≤ 100 mm in relation to the body of the vehicle during the displacement from the closed position to the deployed position. The distances dₓᵣ and d_{zr} are determined at the location where the hinge arrangement is attached to the bonnet.

Thereby, it is possible to provide a large enough gap in the deployed position between the bonnet and any hard engine parts. Further, in the case of providing partial access to the engine compartment, there will be enough room to fill the vehicular liquid.

In a third aspect of the present invention, there is provided a vehicle comprising a hinge arrangement as described herein or a bonnet arrangement as described herein.

### BRIEF DESCRIPTION OF THE DRAWINGS

The present invention will hereinafter be further explained by means of non-limiting examples with reference to the appended drawings wherein:
- Fig. 1: is a schematic side view of a bonnet arrangement according to the invention, showing a bonnet in a closed, an open and a deployed position, respectively,
- Fig. 2: illustrates a hinge arrangement of the bonnet arrangement of Figure 1 in a normal state,
- Fig. 3: illustrates the hinge arrangement of Figure 2 in a deployed state,
- Fig. 4: is a detailed view of a deployment guiding element,
- Fig. 5: illustrates the hinge arrangement of Figure 3 after being impacted,
- Fig. 6: illustrates the hinge arrangement of Figure 2 during opening of the bonnet.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, as defined by the appended claims. Details from two or more of the embodiments may be combined with each other.

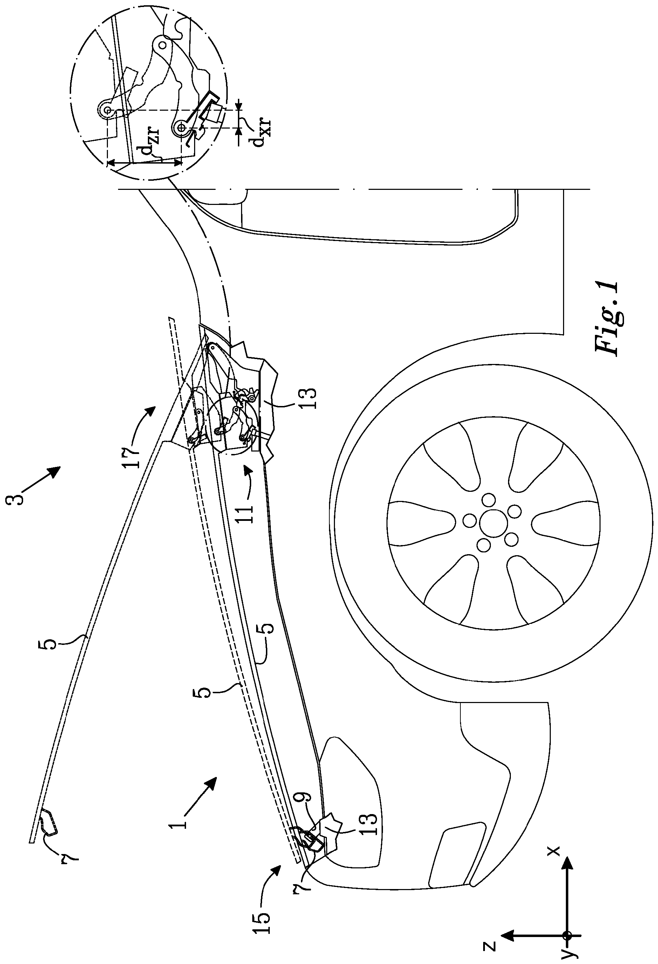

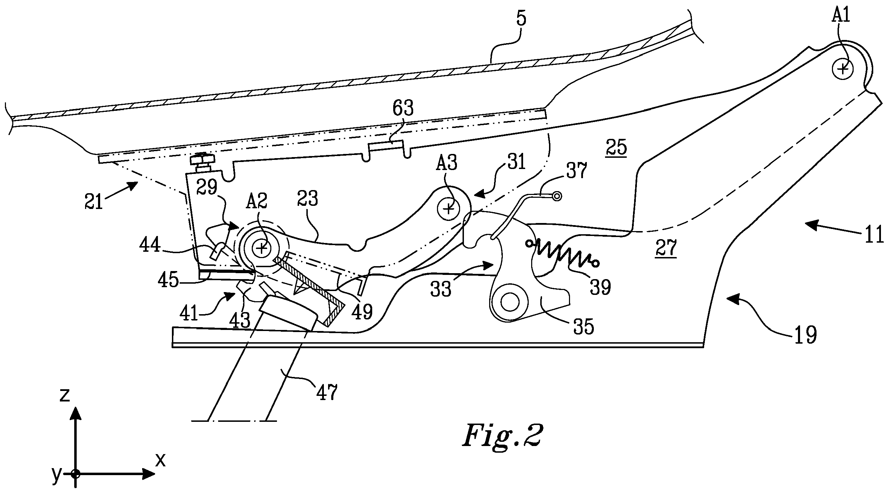

Figure 1 schematically illustrates a bonnet arrangement 1 of a vehicle 3 according to the invention. The vehicle in this case is a car 3. The bonnet arrangement 1 comprises a bonnet 5, a striker 7, a latch 9 and a hinge arrangement 11. The bonnet 5 is connected to a body 13 of the vehicle 3 by the striker 7 and the latch 9 at a front end portion 15 of the bonnet 5, and by the hinge arrangement 11 at a rear end portion 17 of the bonnet 5. The hinge arrangement 11 will be further described below in conjunction with Figures 2-6.

The bonnet 5 is shown in a closed position, see continuous line, in a deployed position, see dashed line, and in an open position, see dotted line.

The closed position of the bonnet 5 is used during normal driving of the vehicle 3 and during parking of the vehicle 3.

The open position of the bonnet 5, as indicated by the dotted line in Figure 1, permits access to the engine compartment, e.g. for service, maintenance or repair work. In order to reach the open position, the bonnet 5 is pivoted at or adjacent to its rear end portion 17 by means of the hinge arrangement 11. The bonnet 5 is then displaced directly from the closed position to the open position without passing the deployed position. When closing the bonnet 5 again from the open position, the opening displacement may be reversed. The bonnet 5 is also displaceable from the closed position to the deployed position. As already mentioned above in the background section, it is well-known to use a deployable bonnet in a vehicle. By raising the bonnet 5 to a deployed position, also called a pop-up position, the distance between the bonnet 5 and any hard engine parts is increased, thereby reducing the severity of an accident involving a vulnerable road user being thrown onto the bonnet. As an option, which is illustrated in Figure 1, the bonnet arrangement 1 of the invention may also raise the front end portion 15 of the bonnet 5 in order to reach the deployed position. This may be advantageous if the vulnerable road user hits a front portion of the bonnet 5, which e.g. may be the case, if the vulnerable road user is short, e.g. a child.

When being displaced from its closed position to its deployed position, the bonnet 5 of the illustrated embodiment moves simultaneously upwards in the z-direction and rearwards in the x-direction. Not only the rear end portion 17, but also the front end portion 15, is displaced upwards and rearwards. Preferably, the bonnet 5 is also displaceable from the deployed position back to the closed position, such that the bonnet arrangement 1 may be restored to the closed position after the deployed position has been activated.

The rear end portion 17 of the bonnet 5 may be adapted to be displaced rearwards by a longitudinal distance dₓᵣ in the range of 0 < dₓᵣ ≤ 70 mm, preferably 10 mm ≤ dₓᵣ ≤ 40 mm in relation to the body 13 of the vehicle 3 during the displacement from the closed position to the deployed position. Further, the rear end portion 17 may be adapted to be displaced upwards by a vertical distance d_{zr} being in the range of 0 < d_{zr} ≤ 150 mm, preferably 50 mm ≤ d_{zr} ≤ 100 mm in relation to the body 13 of the vehicle 3 during the displacement from the closed position to the deployed position. The distances dₓᵣ and d_{zr} are determined at the location where the hinge arrangement 11 is attached to the bonnet 5.

When the bonnet 5 is in the deployed position, there is partial access to the engine compartment. Thereby it is possible to e.g. fill vehicular liquids, such as a washer fluid or a coolant, without having to open the bonnet 5 to the open position.

One pair of a striker 7 and a latch 9 may be used. In that case, the pair is preferably located at or adjacent to the centre of the front end portion 15 of the bonnet 5. Often, there is one pair of a striker 7 and a latch 9 at or adjacent to each lateral side of the front end portion 15 of the bonnet 5.

Usually, there is one hinge arrangement 11 at or adjacent to each lateral side of the rear end portion 17 of the bonnet 5. However, one, two, three or more hinge arrangements may be used.

The directionality of the hinge arrangement 11 corresponds to the directionality of the vehicle 3, such that a longitudinal direction x of the hinge arrangement 11 corresponds to a longitudinal direction of the vehicle 3, a transverse direction y of the hinge arrangement 11 corresponds to a transverse direction of the vehicle 3 and a vertical direction z of the hinge arrangement 11 corresponds to a vertical direction of the vehicle 3, assuming the vehicle is standing on a horizontal ground.

In the embodiment of Figure 1, the striker 7 is attached to the bonnet 5, while the latch 9 is attached to the body 13 of the vehicle 3. As an alternative, not illustrated, the striker 7 may be attached to the body 13 of the vehicle 3 and the latch 9 to the bonnet 5. In any case, the striker 7 and the latch 9 are located such that they can cooperate with each other, when the bonnet 5 is in the closed position and the deployed position, respectively.

As an alternative to displacing both the front end portion 15 and the rear end portion 17 when going to the deployed position of the bonnet 5, the front end portion 15 may remain in a relative position similar to that of the closed position of the bonnet 5, while only displacing the rear end portion 17.

Figures 2-6 illustrate an embodiment of a hinge arrangement 11 according to the invention. The illustrated embodiment is the hinge arrangement 11 at the rear end portion 17 of the bonnet 5 of Figure 1.

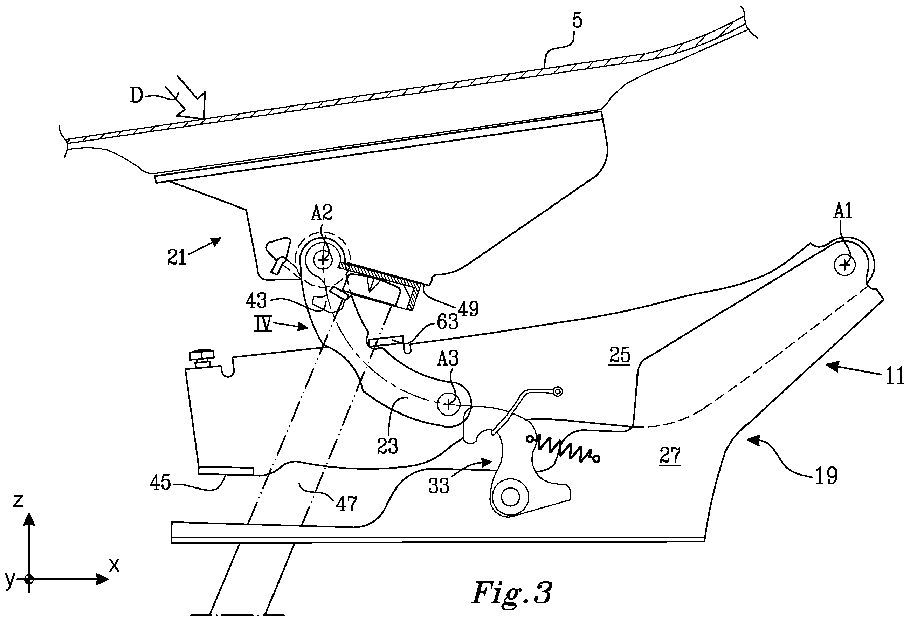

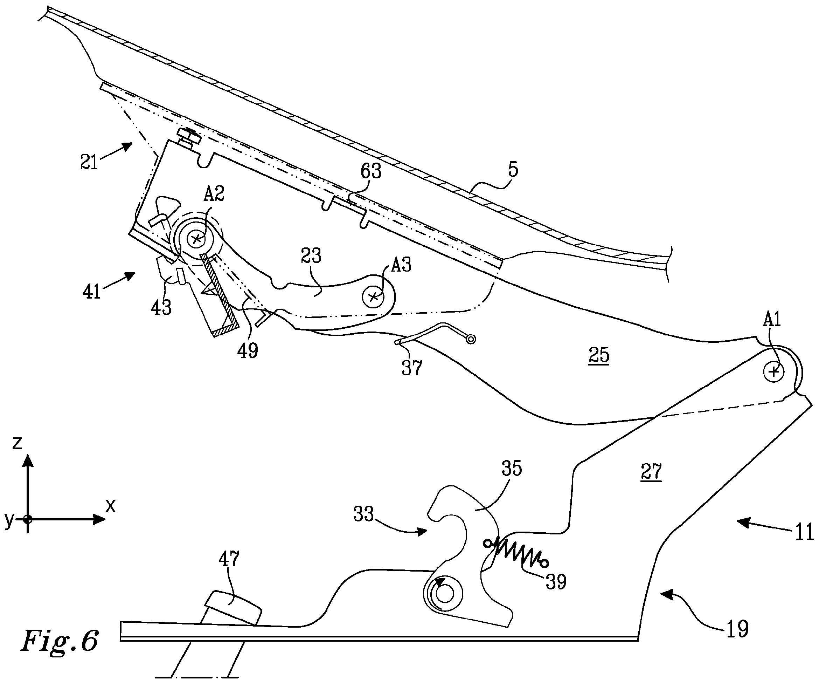

The hinge arrangement 11 comprises a hinge portion 19 adapted to be directly or indirectly attached to the body 13 of the vehicle 3, a bracket portion 21 adapted to be directly or indirectly attached to the bonnet 5 and a deployment guiding element 23. The hinge arrangement 11 is transitable between a normal state, illustrated in Figure 2, corresponding to the bonnet 5 being in the closed position, and a deployed state, illustrated in Figure 3, corresponding to the bonnet 5 being in the deployed position. In the open position of the bonnet 5, illustrated in Figure 6, the hinge arrangement 11 is in its normal state.

The hinge portion 19 comprises one or more hinge pivot axes providing a hinged connection between the bonnet 5 and the body 13 of the vehicle 3 allowing normal opening of the bonnet 5 for maintenance, service and repair. In the illustrated embodiment, the hinge arrangement 11 comprises a single hinge pivot axis A1, but it would also be feasible with a multi-link hinged connection comprising a plurality of pivot axes. The hinge portion 19 comprises a first member 25 being more distal to the body 13 than the hinged connection, and a second member 27 being less distal, i.e. more proximal, to the body 13 than the hinged connection. In the illustrated embodiment, the first member 25 is pivotally connected to the second member 27 by the hinge pivot axis A1, such that the hinge pivot axis A1 provides the hinged connection. However, for a multi-link hinged connection, there may be other portions or elements, such as link arms, located between the first member 25 and the second member 27.

The deployment guiding element 23 is adapted to control the transition of the hinge arrangement 11 between the normal state and the deployed state. In the illustrated embodiment, the deployment guiding element 23 comprises an arm with a curved shape, illustrated as a crescent shape, having a first end 29 pivotally connected at a second pivot axis A2 to the bracket portion 21 and a second end 31 pivotally connected at a third pivot axis A3 to the first member 25 of the hinge portion 23. The deployment guiding element 23 is located in a space between the first member 25 of the hinge portion 19 and the bracket portion 21.

The hinge portion 19 comprises a first locking unit 33, in the illustrated embodiment, comprising a hook 35 and a catch 37. The first locking unit 33 may assume a locked state, as is illustrated in Figures 2-3, or an open state, as is illustrated in Figure 6. The hook 35 is tensioned, e.g. by a spring 39, such that it is biased to the locked state. In the locked state, the first member 25 is locked in relation to the second member 27 of the hinge arrangement 11, i.e. their positions in relation to each other are fixed. When the hinge arrangement 11 is transited to its deployed state, the first locking unit 33 will stay in its locked state, such that there is no pivotal movement at the hinged connection A1 of the hinge arrangement 11 during displacement of the bonnet 5 to the deployed position. In the open state of the first locking unit 33, the spring 39 is tensioned, in the illustrated case by being compressed. The hook 35 is then movable away from the catch 37. The first member 25 is then displaceable in relation to the second member 27 by means of the hinged connection A1, thus allowing normal opening of the bonnet 5, as will be further described in conjunction with Figure 6. Other tension arrangements for the hook 35 are feasible, e.g. a spring which is elongated when changing to the open state.

In the illustrated embodiment, the hook 35 is located at the second member 27 and the catch 37 at the first member 25, but they may also be located in the opposite way. Other kinds of first locking units are feasible, but not illustrated, such as a spring-loaded pin attached to one of the first member 25 or the second member 27 and going through an opening in the other of the first member 25 or the second member 27, which pin may be pulled out from the opening to assume the open state allowing pivotal movement at the hinged connection A1 between the first member 25 and the second member 27.

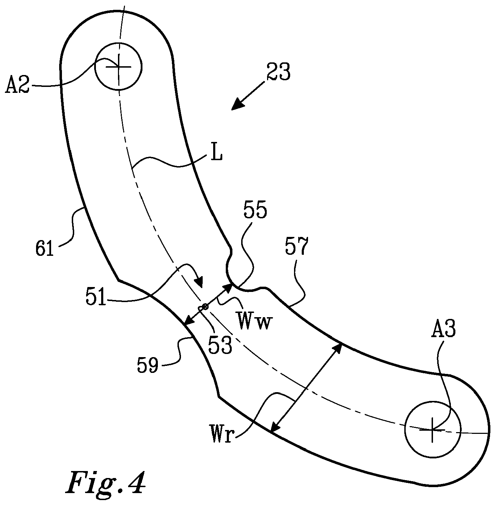

The hinge arrangement 11 comprises a second locking unit 41, which may assume a locked state, as is illustrated in Figures 2 and 6, or an open state, as is illustrated in Figures 3 and 4. In the locked state, the bracket portion 21 is locked in relation to the first member 25 of the hinge portion 19. In the open state of the second locking unit 41, the bracket portion 21 as a whole is allowed to move in relation to the first member 25 of the hinge portion 19. This movement is controlled by the deployment guiding element 23. In the illustrated embodiment, the second locking unit 41 comprises a hook 43 attached to the bracket portion 21, which hook 43 is adapted to grip around a catch 45 of the first member 25 of the hinge portion 19. The hook 43 is attached to the bracket portion 21 by the second pivot axis A2 and is pivotable around that axis A2, such that the hook 43 can be moved out of grip of the catch 45. The second locking unit 41 may be biased to its locked state, e.g. by the hook 43 being tensioned by a spring 44.

In order to be able to transit the hinge arrangement 11 to its deployed state, thereby also displacing the bonnet 5 to its deployed position, the hinge arrangement 11 comprises a lifting member 47, e.g. a piston, which may be released by pyrotechnics. The bracket portion 21 comprises an abutment 49. When the lifting member 47 directly or indirectly acts on the abutment 49, the bracket portion 21 is displaced upwards and rearwards in a displacement governed by the deployment guiding element 23. See Figure 3.

When the lifting member 47 is activated, e.g. when a sensor of the vehicle 3 has indicated a collision with a vulnerable road user or an imminent collision with a vulnerable road user, the lifting member 47 initially operates on the second locking unit 41, such that the second locking unit 41 is changed to its open state. In the illustrated embodiment, the lifting member 47 moves the hook 43 out of way of the catch 45 by pivoting the hook 43 around the second pivot axis A2. Thereafter the bracket portion 21 is free to move as a whole in relation to the hinge portion 19, in particular in relation to the first member 25 of the hinge portion 19. The lifting member 47 then acts via the hook 43 on the abutment 49, thereby displacing the bracket portion 21. As an alternative, the lifting member 47 may act directly on the bracket portion 21.

The bracket portion 21 is translationally displaced upwards and rearwards in relation to the hinge portion 19 by a movement governed by the deployment guiding element 23 in order to reach the deployed state of the hinge arrangement 11. In the illustrated embodiment, the movement follows an arc of a circle. During the displacement, the bracket portion 21 has no direct connection to the hinge portion 19. Instead they are indirectly connected via the deployment guiding element 23. The hinge portion 19 remains in its normal state, which is the state also corresponding to a closed bonnet 5. There is then no relative movement within the hinge portion 19 and the hinged connection, illustrated as the hinge pivot axis A1, is inactive. Hence, the relative movement within the hinge arrangement 11 during the transition of the hinge arrangement 11 to the deployed state and the relative movement within the hinge arrangement 11 during normal opening of the bonnet 5 are decoupled from each other.

The first member 25 of the hinge portion 19 comprises an abutment member 63, e.g. a flange protruding in the transverse direction y, which may be adapted to provide an abutment for the bracket portion 21 in the normal state of the hinge arrangement 11.

Figure 3 illustrates the hinge arrangement 11 in its deployed state. In comparison to Figure 2, the deployment guiding element 23 has pivoted around the second and third pivot axes A2, A3, such that the bonnet 5 assumes its deployed position. The abutment member 63 acts as a stop for the deployment guiding element 23, such that it cannot pivot any further. The first locking unit 33 remains in its locked state during the displacement of the hinge arrangement 11 to its deployed state.

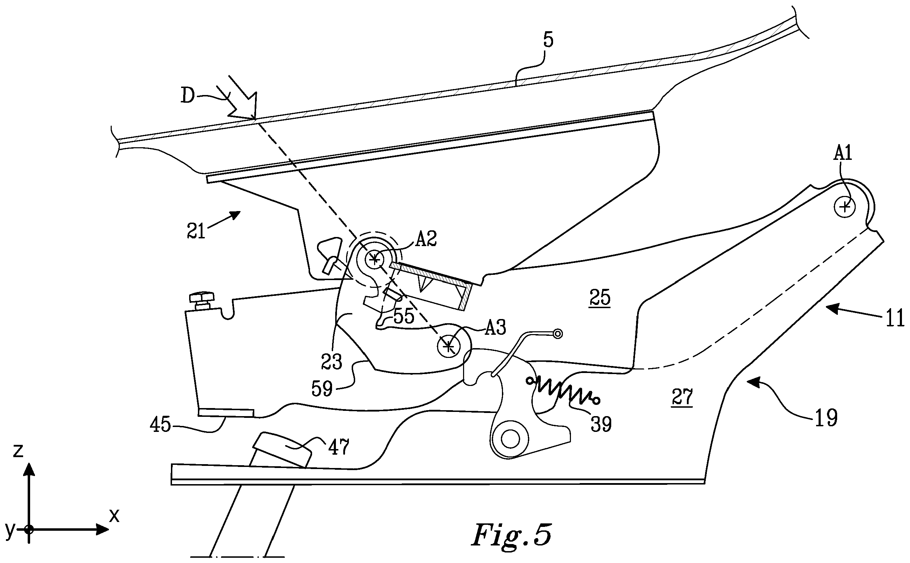

An arrow D illustrates a likely direction for a head of a vulnerable road user to impact on the bonnet 5. Due to the curved shape of the deployment guiding element 23, which curved shape is in the longitudinal direction x of the hinge arrangement 11, the deployment guiding element 23 will upon impact bend in the curved direction. See Figure 5.

Preferably, the deployment guiding element 23 bends in a jack-knife-like manner in, or substantially in, a plane extending in the longitudinal direction x and the vertical direction z of the hinge arrangement 11. Thereby deformation in the transverse direction y of the hinge arrangement 11 is avoided or substantially avoided. Hence, the deployment guiding element 23 will substantially deform in the space between the first member 25 of the hinge portion 19 and the bracket portion 21.

In order to obtain the desired deformation of the deployment guiding element 23, it is provided with a deformation control means. See Figure 4 for details. In the illustrated embodiment, the deployment guiding element 23 has the above-mentioned curved shape, which gives the deployment guiding element 23 a preferred bending direction. As an alternative, or a complement, the deployment guiding element 23 comprises a waist 51 located at or adjacent to a centre 53 of the deployment guiding element 23. A width w_{w} of the waist 51 is less than a width wᵣ of the deployment guiding element 23 taken outside of the waist 51, ascertaining that the deployment guiding element 23 will start bending at the waist 51. The waist 51 may be formed by a notch 55 at an edge 57 of the deployment guiding element 23 facing the hinged connection A1, as is illustrated, by one or more apertures through the deployment guiding element 23, not illustrated, and/or by an indentation 59 at the opposite edge 61 facing away from the hinged connection A1.

By selecting one or more parameters of the deformation control means, it may be obtained that the deployment guiding element 23 deforms as a desired force level of the impact force. Examples of such parameters are material, shape and thickness of the deployment guiding element 23, width and location of the waist 51, location and shape of one or more notches 55 or apertures.

Often, the waist 51 or the one or more notches 55 or apertures is/are located close to the centre 53 of the deployment guiding element 23, as is illustrated. However, it may be located in a region being defined by a centre 53 of the deployment guiding element +/-40% of a length of a centreline L of the deployment guiding element, preferably in a region being defined by the centre +/- 30% of the length of the centreline, more preferably in a region being defined by the centre +/- 20% of the length of the centreline, most preferably in a region being defined by the centre +/- 10% of the length of the centreline. The centreline L follows the curved shape of the deployment guiding element 23.

Figure 6 illustrates the hinge arrangement 11 during normal opening of the bonnet 5. The bonnet 5 is opened by rotation in the hinged connection. In the illustrated embodiment, the first member 25 of the hinge portion 19 is pivoted relative to the second member 27 at the hinge pivot axis A1 providing the hinged connection. The bracket portion 21 is meanwhile in a fixed position relative to the first member 25 of the hinge portion 19 during opening of the bonnet 5. In the illustrated embodiment, the bracket portion 21 is locked by the second locking unit 41 being in its locked state. The bracket portion 21 hence moves together with the first member 25 in the pivotal movement around the hinge pivot axis A1. The deployment guiding element 23 is inactive. The first locking unit 33 is in its open state, which is further described above in conjunction with Figure 2.

As such, the present invention should not be considered as limited by the embodiments and figures described herein. Rather, the full scope of the invention should be determined by the appended claims, with reference to the description and drawings. In particular, the hinge arrangement may be located at the front end portion of the bonnet, although the embodiment of Figures 1-6 illustrates a location at the rear end portion of the bonnet.

## Claims

1. A hinge arrangement (11) adapted to be located at an end portion (15, 17) of a bonnet (5) of a vehicle (3),
said hinge arrangement (11) having a longitudinal direction (x), a transverse direction (y) and a vertical direction (z),
said hinge arrangement (11) being transitable between a normal state and a deployed state,
said hinge arrangement (11) comprising
- a hinge portion (19) adapted to be attached, directly or indirectly, to a body (13) of said vehicle (3),
- a bracket portion (21) adapted to be attached, directly or indirectly, to said bonnet (5), and
- a deployment guiding element (23),
said hinge portion (19) comprising a first member (25), a second member (27) and a hinge pivot axis (A1) providing a hinged connection between said first member (25) and said second member (27),
said deployment guiding element (23) comprising a first end (29) pivotally connected to said bracket portion (21) and a second end (31) pivotally connected to said first member (25),
**characterized by**
said bracket portion (21) being arranged to be in a fixed position relative to said first member (25) during movement in said hinged connection,
said bracket portion (21) being arranged to be translationally displaced as a whole at least in said vertical direction in relation to said first member (25) of said hinge portion (19) during said transition of said hinge arrangement (11) between said normal state and said deployed state, said deployment guiding element (23) being adapted to control said transition, said hinged connection (A1) being inactive during said transition,
said deployment guiding element (23) comprising a deformation control means (51, 55, 59) configured to make said deployment guiding element (23) deformable at a preselectable force level in said deployed state of said hinge arrangement, such that said bracket portion (21) is displaceable towards said first member (25).

2. The hinge arrangement (11) according to claim 1, wherein said deployment guiding element (23) is configured to substantially deform in a plane extending in said longitudinal direction (x) and said vertical direction (z) of said hinge arrangement (11), preferably said deployment guiding element (23) being configured to deform in said plane only, e.g. by bending and/or buckling in said plane.

3. The hinge arrangement (11) according to any one of the preceding claims,
wherein said deformation control means comprises a curved-shape portion of said deployment guiding element (23).

4. The hinge arrangement (11) according to any one of the preceding claims,
wherein said deformation control means comprises a waist (51) in said deployment guiding element (23), said waist (51) being less resistant to deformation than the rest of said deployment guiding element (23).

5. The hinge arrangement (11) according to any one of the preceding claims,
wherein said deformation control means comprises a notch (55) or an indentation (59) at an edge (57, 61) of said deployment guiding element (23).

6. The hinge arrangement (11) according to any one of the preceding claims,
wherein said deformation control means comprises at least one aperture through said deployment guiding element (23).

7. The hinge arrangement (11) according to any one of the preceding claims,
wherein said deformation control means is located in said deployment guiding element (23) in a region being defined by a centre (53) of said deployment guiding element (23) +/- 40% of a length of a centreline (L) of said deployment guiding element (23), preferably in a region being defined by said centre (53) +/- 30% of said length of said centreline (L), more preferably in a region being defined by said centre (53) +/- 20% of said length of said centreline (L), most preferably in a region being defined by said centre (53) +/- 10% of said length of said centreline (L).

8. The hinge arrangement (11) according to any one of the preceding claims,
wherein said first member (25) of said hinge portion (19) comprises an abutment member (63), e.g. a flange, adapted to provide an abutment for said bracket portion (21) in said normal state of said hinge arrangement (11) and/or to provide a stop for said deployment guiding element (23) in said deployed state of said hinge arrangement (11).

9. The hinge arrangement (11) according to any one of the preceding claims,
wherein said hinge portion (19) comprises a first locking unit (33) having a locked state and an open state and being adapted to lock said first member (25) of said hinge portion (19) in relation to said second member (27) of said hinge portion (19).

10. The hinge arrangement (11) according to claim 9, wherein said first locking unit (33) comprises a first locking member (35) pivotally attached to one of said first member (25) and said second member (27) of said hinge portion (19), said first locking member (35) being adapted to cooperate with a catch (37) located at the other of said first member (25) and said second member (27) of said hinge portion (19), thereby locking said first member (25) in relation to said second member (27).

11. The hinge arrangement (11) according to any one of the preceding claims comprising a second locking unit (41) having a locked state and an open state and being adapted to lock said bracket portion (21) in relation to said first member (25) of said hinge portion (19).

12. The hinge arrangement (11) according to any one of the preceding claims further comprising a lifting member (47) adapted to operate on said bracket portion (21), thereby providing said translational displacement at least in said vertical direction of said bracket portion (21) in relation to said first member (25) of said hinge portion (19) during said transition of said hinge arrangement (11) between said normal state and said deployed state.

13. The hinge arrangement (11) according to claim 12 when dependent on claim 11, said lifting member (47) being adapted to operate on said second locking unit (41), such that said second locking unit (41) is changed from said locked state to said open state by said lifting member (47).

14. A bonnet arrangement (1) for a vehicle (3), said bonnet arrangement (1) comprising
- a bonnet (5) being displaceable between a closed position and a deployed position located at least upwards as compared to said closed position, and
- a hinge arrangement (11) according to any one of the preceding claims,
said bracket portion (21) of said hinge arrangement (11) being attached, directly or indirectly, to said bonnet (5).

15. A vehicle comprising said hinge arrangement (11) according to any one of claims 1-13 or said bonnet arrangement according to claim 14.

## Patentansprüche

1. Scharnieranordnung (11), die dazu eingerichtet ist, sich an einem Endabschnitt (15, 17) einer Motorhaube (5) eines Fahrzeugs (3) zu befinden,
wobei die Scharnieranordnung (11) eine Längsrichtung (x), eine Querrichtung (y) und eine vertikale Richtung (z) aufweist,
wobei die Scharnieranordnung (11) von einem Normalzustand in einen Entfaltungszustand und umgekehrt bringbar ist wobei die Scharnieranordnung (11) Folgendes umfasst
- einen Scharnierabschnitt (19), der dazu eingerichtet ist, direkt oder indirekt an einem Aufbau (13) des Fahrzeugs (3) befestigt zu werden,
- einen Bügelabschnitt (21), der dazu eingerichtet ist, direkt oder indirekt an der Motorhaube (5) befestigt zu werden, und
- ein Entfaltungsführungselement (23),
wobei der Scharnierabschnitt (19) ein erstes Element (25), ein zweites Element (27) und eine Scharnierschwenkachse (AI), die eine Scharnierverbindung zwischen dem ersten Element (25) und dem zweiten Element (27) vorsieht, umfasst,
wobei das Entfaltungsführungselement (23) ein erstes Ende (29), das verschwenkbar mit dem Bügelabschnitt (21) verbunden ist, und ein zweites Ende (31), das verschwenkbar mit dem ersten Element (25) verbunden ist, umfasst,
**dadurch gekennzeichnet, dass**
der Bügelabschnitt (21) dazu angeordnet ist, während der Bewegung der Scharnierverbindung in Bezug zum ersten Element (25) in einer festen Position zu sein,
wobei der Bügelabschnitt (21) dazu angeordnet ist, während des Übergangs der Scharnieranordnung (11) zwischen dem Normalzustand und dem Entfaltungszustand insgesamt zumindest in vertikale Richtung in Bezug zum ersten Element (25) des Scharnierabschnitts (19) verstellt zu werden, wobei das Entfaltungsführungselement (23) dazu eingerichtet ist, den Übergang zu steuern, wobei die Scharnierverbindung (A1) während des Übergangs inaktiv ist, wobei das Entfaltungsführungselement (23) eine Verformungssteuerungseinrichtung (51, 55, 59) umfasst, die dazu ausgelegt ist, das Entfaltungsführungselement (23) bei einem vorauswählbaren Kraftniveau im Entfaltungszustand der Scharnieranordnung verformbar zu machen, sodass der Bügelabschnitt (21) in Richtung des ersten Elements (25) verstellbar ist.

2. Scharnieranordnung (11) nach Anspruch 1, wobei das Entfaltungsführungselement (23) dazu ausgelegt ist, sich im Wesentlichen in einer Ebene, die sich in Längsrichtung (x) und Vertikalrichtung (z) der Scharnieranordnung (11) erstreckt, zu verformen, wobei das Entfaltungsführungselement (23) vorzugsweise dazu ausgelegt ist, sich z. B. durch Verbiegen und/oder Stauchen in der Ebene nur in der Ebene zu verformen.

3. Scharnieranordnung (11) nach einem der vorstehenden Ansprüche,
wobei die Verformungssteuerungseinrichtung einen gekrümmten Abschnitt des Entfaltungsführungselements (23) umfasst.

4. Scharnieranordnung (11) nach einem der vorstehenden Ansprüche, wobei die Verformungssteuerung eine Einschnürung (51) im Entfaltungsführungselement (23) umfasst, wobei die Einschnürung (51) weniger resistent gegen Verformung ist als der Rest des Entfaltungsführungselements (23).

5. Scharnieranordnung (11) nach einem der vorstehenden Ansprüche,
wobei die Verformungssteuerungseinrichtung eine Kerbe (55) oder eine Einbuchtung (59) an einer Kante (57, 61) des Entfaltungsführungselements (23) umfasst.

6. Scharnieranordnung (11) nach einem der vorstehenden Ansprüche,
wobei die Verformungssteuerungseinrichtung mindestens eine Öffnung durch das Entfaltungsführungselement (23) umfasst.

7. Scharnieranordnung (11) nach einem der vorstehenden Ansprüche,
wobei sich die Verformungssteuerungseinrichtung im Entfaltungsführungselement (23) in einem Bereich befindet, der durch eine Mitte (53) des Entfaltungsführungselements (23) +/- 40 % der Länge der Mittellinie (L) des Entfaltungsführungselements (23) definiert ist, vorzugsweise in einem Bereich, der durch die Mitte (53) +/- 30 % der Länge der Mittellinie (L) definiert ist, weiter bevorzugt in einem Bereich, der durch die Mitte (53) +/- 20 % der Länge der Mittellinie (L) definiert ist, am meisten bevorzugt in einem Bereich, der durch die Mitte (53) +/- 10 % der Länge der Mittellinie (L) definiert ist.

8. Scharnieranordnung (11) nach einem der vorstehenden Ansprüche,
wobei das erste Element (25) des Scharnierabschnitts (19) ein Anschlagelement (63), z. B. einen Flansch, umfasst, das dazu eingerichtet ist, im Normalzustand der Scharnieranordnung (11) einen Anschlag für den Bügelabschnitt (21) vorzusehen und/oder im Entfaltungszustand der Scharnieranordnung (11) einen Anschlag für das Entfaltungsführungselement (23) vorzusehen.

9. Scharnieranordnung (11) nach einem der vorstehenden Ansprüche,
wobei der Scharnierabschnitt (19) eine erste Verriegelungseinheit (33) umfasst, die einen Verriegelungszustand und einen Öffnungszustand aufweist und dazu eingerichtet ist, das erste Element (25) des Scharnierabschnitts (19) in Bezug zum zweiten Element (27) des Scharnierabschnitts (19) zu verriegeln.

10. Scharnieranordnung (11) nach Anspruch 9, wobei die erste Verrieglungseinheit (33) ein erstes Verrieglungselement (35) umfasst, das verschwenkbar am ersten Element (25) oder am zweiten Element (27) des Scharnierabschnitts (19) befestigt ist, wobei das erste Verrieglungselement (35) dazu eingerichtet ist, mit einem Riegel (37) zusammenzuwirken, der sich an dem jeweils anderen des ersten Elements (25) und des zweiten Elements (27) des Scharnierabschnitts (19) befindet, wodurch das erste Element (25) in Bezug zum zweiten Element (27) verriegelt wird.

11. Scharnieranordnung (11) nach einem der vorstehenden Ansprüche,
eine zweite Verrieglungseinheit (41) umfassend, die einen Verriegelungszustand und einen Öffnungszustand aufweist und dazu eingerichtet ist, den Bügelabschnitt (21) in Bezug zum ersten Element (25) des Scharnierabschnitts (19) zu verriegeln.

12. Scharnieranordnung (11) nach einem der vorstehenden Ansprüche, ferner ein Hubelement (47) umfassend, das dazu eingerichtet ist, auf den Bügelabschnitt (21) zu wirken, wodurch während des Übergangs der Scharnieranordnung (11) zwischen dem Normalzustand und dem Entfaltungszustand die Verschiebung zumindest in vertikale Richtung des Bügelabschnitts (21) in Bezug zum ersten Element (25) des Scharnierabschnitts (19) vorgesehen wird.

13. Scharnieranordnung (11) nach Anspruch 12, wenn abhängig von Anspruch 11,
wobei das Hubelement (47) dazu eingerichtet ist, auf die zweite Verriegelungseinheit (41) zu wirken, sodass die zweite Verriegelungseinheit (41) durch das Hubelement (47) vom Verriegelungszustand in den Öffnungszustand versetzt wird.

14. Motorhaubenanordnung (1) für ein Fahrzeug (3), wobei die Motorhaubenanordnung (1) Folgendes umfasst
- eine Motorhaube (5), die zwischen einer geschlossenen Position und einer entfalteten Position, die sich zumindest im Vergleich zur geschlossenen Position darüber befindet, verstellbar ist, und
- eine Scharnieranordnung (11) nach einem der vorstehenden Ansprüche, wobei der Bügelabschnitt (21) der Scharnieranordnung (11) direkt oder indirekt an der Motorhaube (5) befestigt ist.

15. Fahrzeug, das die Scharnieranordnung (11) nach einem der Ansprüche 1-13 oder die Motorhaubenanordnung nach Anspruch 14 umfasst.

## Revendications

1. Agencement de charnière (11) adapté pour être placé sur une partie d'extrémité (15, 17) d'un capot (5) d'un véhicule (3),
ledit agencement de charnière (11) ayant une direction longitudinale (x), une direction transversale (y) et une direction verticale (z),
ledit agencement de charnière (11) pouvant se déplacer entre un état normal et un état déployé,
ledit agencement de charnière (11) comprenant :
- une partie charnière (19) adaptée pour être fixée, directement ou indirectement, à une carrosserie (13) dudit véhicule (3),
- une partie support (21) adaptée pour être fixée, directement ou indirectement, audit capot (5), et
- un élément de guidage de déploiement (23),
ladite partie charnière (19) comprenant un premier élément (25), un second élément (27) et un axe de pivot de charnière (A1) fournissant une connexion articulée entre ledit premier élément (25) et ledit second élément (27),
ledit élément de guidage de déploiement (23) comprenant une première extrémité (29) reliée de manière pivotante à ladite partie support (21) et une seconde extrémité (31) reliée de manière pivotante audit premier élément (25),
**caractérisé par**
ladite partie support (21) étant agencée pour être dans une position fixe par rapport audit premier élément (25) pendant le mouvement dans ladite connexion articulée,
ladite partie support (21) étant agencée pour être déplacée en translation dans son ensemble au moins dans ladite direction verticale par rapport audit premier élément (25) de ladite partie charnière (19) pendant ladite transition dudit agencement de charnière (11) entre ledit état normal et ledit état déployé, ledit élément de guidage de déploiement (23) étant adapté pour commander ladite transition, ladite connexion articulée (A1) étant inactive pendant ladite transition,
ledit élément de guidage de déploiement (23) comprenant un moyen de commande de déformation (51, 55, 59) configuré pour rendre ledit élément de guidage de déploiement (23) déformable à un niveau de force présélectionnable dans ledit état déployé dudit agencement de charnière, de telle sorte que ladite partie support (21) peut se déplacer vers ledit premier élément (25).

2. Agencement de charnière (11) selon la revendication 1, dans lequel ledit élément de guidage de déploiement (23) est configuré pour se déformer sensiblement dans un plan s'étendant dans ladite direction longitudinale (x) et ladite direction verticale (z) dudit agencement de charnière (11), de préférence ledit élément de guidage de déploiement (23) étant configuré pour se déformer dans ledit plan uniquement, par exemple en se pliant et/ou se voilant dans ledit plan.

3. Agencement de charnière (11) selon l'une quelconque des revendications précédentes, dans lequel ledit moyen de commande de déformation comprend une partie de forme incurvée dudit élément de guidage de déploiement (23).

4. Agencement de charnière (11) selon l'une quelconque des revendications précédentes, dans lequel ledit moyen de commande de déformation comprend un rétrécissement (51) dans ledit élément de guidage de déploiement (23), ledit rétrécissement (51) étant moins résistant à la déformation que le reste dudit élément de guidage de déploiement (23).

5. Agencement de charnière (11) selon l'une quelconque des revendications précédentes, dans lequel ledit moyen de commande de déformation comprend une encoche (55) ou une indentation (59) sur un bord (57, 61) dudit élément de guidage de déploiement (23).

6. Agencement de charnière (11) selon l'une quelconque des revendications précédentes, dans lequel ledit moyen de commande de déformation comprend au moins une ouverture à travers ledit élément de guidage de déploiement (23).

7. Agencement de charnière (11) selon l'une quelconque des revendications précédentes, dans lequel ledit moyen de commande de déformation est situé dans ledit élément de guidage de déploiement (23) dans une région définie par un centre (53) dudit élément de guidage de déploiement (23) +/- 40% d'une longueur d'un axe central (L) dudit élément de guidage de déploiement (23), de préférence dans une région définie par ledit centre (53) +/- 30% de ladite longueur dudit axe central (L), plus préférablement dans une région définie par ledit centre (53) +/- 20% de ladite longueur dudit axe central (L), idéalement dans une région définie par ledit centre (53) +/-10% de ladite longueur dudit axe central (L).

8. Agencement de charnière (11) selon l'une quelconque des revendications précédentes, dans lequel ledit premier élément (25) de ladite partie charnière (19) comprend un élément de butée (63), par exemple une bride, adapté pour fournir une butée pour ladite partie support (21) dans ledit état normal dudit agencement de charnière (11) et/ou pour fournir une butée pour ledit élément de guidage de déploiement (23) dans ledit état déployé dudit agencement de charnière (11).

9. Agencement de charnière (11) selon l'une quelconque des revendications précédentes, dans lequel ladite partie charnière (19) comprend une première unité de verrouillage (33) ayant un état verrouillé et un état déverrouillé et étant adaptée pour verrouiller ledit premier élément (25) de ladite partie charnière (19) par rapport audit second élément (27) de ladite partie charnière (19).

10. Agencement de charnière (11) selon la revendication 9, dans lequel ladite première unité de verrouillage (33) comprend un premier élément de verrouillage (35) fixé de manière pivotante à l'un parmi ledit premier élément (25) et ledit second élément (27) de ladite partie charnière (19), ledit premier élément de verrouillage (35) étant adapté pour coopérer avec un loquet (37) situé au niveau de l'autre parmi ledit premier élément (25) et ledit second élément (27) de ladite partie charnière (19), verrouillant ainsi ledit premier élément (25) par rapport audit second élément (27).

11. Agencement de charnière (11) selon l'une quelconque des revendications précédentes comprenant une seconde unité de verrouillage (41) ayant un état verrouillé et un état déverrouillé et étant adaptée pour verrouiller ladite partie support (21) par rapport audit premier élément (25) de ladite partie charnière (19) .

12. Agencement de charnière (11) selon l'une quelconque des revendications précédentes comprenant en outre un élément de levage (47) adapté pour fonctionner sur ladite partie support (21), fournissant ainsi ledit déplacement de translation au moins dans ladite direction verticale de ladite partie support (21) par rapport audit premier élément (25) de ladite partie charnière (19) pendant ladite transition dudit agencement de charnière (11) entre ledit état normal et ledit état déployé.

13. Agencement de charnière (11) selon la revendication 12 lorsqu'elle dépend de la revendication 11, ledit élément de levage (47) étant adapté pour fonctionner sur ladite seconde unité de verrouillage (41), de sorte que ladite seconde unité de verrouillage (41) est modifiée dudit état verrouillé audit état déverrouillé par ledit élément de levage (47).

14. Agencement de capot (1) pour un véhicule (3), ledit agencement de capot (1) comprenant :
- un capot (5) pouvant être déplacé entre une position fermée et une position déployée située au moins vers le haut par rapport à ladite position fermée, et
- un agencement de charnière (11) selon l'une quelconque des revendications précédentes,
ladite partie support (21) dudit agencement de charnière (11) étant fixée, directement ou indirectement, audit capot (5).

15. Véhicule comprenant ledit agencement de charnière (11) selon l'une quelconque des revendications 1 à 13 ou ledit agencement de capot selon la revendication 14.
